# EUROPEAN PATENT APPLICATION

(11) **EP 4 471 389 A1**
(43) Date of publication of application: **04.12.2024**
(21) Application number: 23176290.7
(22) Date of filing: 31.05.2023
(51) Int. Cl.: G01H 9/00, B65G 27/32

(54) **AMPLITUDE DETERMINATION METHOD AND ARRANGEMENT FOR VIBRATION CONVEYING SYSTEMS**

(71) Applicant: B&R Industrial Automation GmbH, 5142 Eggelsberg (AT)
(72) Inventor: Jensen, Sverre Faureholm, 5142 Eggelsberg (AT)
(74) Representative: Patentanwälte Pinter & Weiss OG

(57) **Abstract**

To provide a simple, reliable and safe amplitude measuring device and method for vibration conveying systems and to ensure a closed-loop system without being affected by vibrations, an imaging unit (3) images a reference part (5) of the vibrating part (1) with a given exposure frequency (f_{E}) while the vibrating part (1) oscillates in the vibration direction (R), in order to take at least one image of the reference part (5) in different positions (6) during at least one full oscillation (O) with a given exposure time (T_{E}), in that opposite extreme positions (7) of the reference part (5) in vibration direction (R) are determined from the at least one image, and in that the vibration amplitude (A) of the vibrating part (1) in the vibration direction (R) is determined as the distance (D) between the determined opposite extreme positions (7).

## Description

The present invention pertains to a method to determine a vibration amplitude of a vibrating part of a vibration conveyor, wherein the vibrating part oscillates with a vibration frequency and a vibration amplitude in a vibration direction. The invention pertains also to an arrangement for determine a vibration amplitude of a vibrating part of a vibration conveyor.

Conveyor systems are common machines in production, handling or assembly plants for moving goods from one location to another. Conveyor systems are commonly used in many industries for conveying a wide variety of parts and materials. For conveying bulk materials vibration conveyors are often used.

A vibration conveyor is a machine with a solid conveying unit that oscillates linearly or rotary. The goods to be conveyed are put on the oscillating unit and are moved in accordance to the oscillations of the conveying unit. A vibration feeder is a vibration conveyor, which is used to feed material to a process or a machine while controlling the flow rate. Vibration conveyors can also utilize both vibration and gravity to move the material (e.g. on a declined conveying unit).

The oscillating conveying unit is driven by a drive unit, like an electromagnetic vibrator known from EP 3 984 921 A1 that is connected to the conveying unit and transfers the oscillating movement of a vibration element of the electromagnetic vibrator to the conveying unit. Apart from an electromagnetic vibrator there may also be used different types of drives for vibrating the conveying unit of a vibration conveyor. To support or amplify the oscillations, also a spring or damper can be connected to the conveying unit.

Overall, the behaviour of the oscillating parts of a conveying unit is nonlinear, and it is therefore complex to predict the exact relationship between a control signal for controlling the oscillations of the conveying unit and the vibration result. Especially since it is aimed to operate the vibration conveyor with or near its mechanical resonance frequency in order to maximize the oscillation amplitude of the conveying unit.

One way to overcome this complexity is to measure the actual vibrations and respond to the measured amplitude in order to control a desired vibration amplitude. This changes the system from an open-loop system to a closed-loop system.

Vibration amplitude can be measured using accelerometers mounted directly to the vibrating parts of the system. However, this method has several disadvantages, as accelerometers require calibration and must be connected to signal processing equipment. In addition, accelerometers also require an electrical connection that is subject to constant vibration and will degrade over time.

It is therefore an object of the present invention to provide a simple, reliable and safe amplitude determination device and method for vibration conveying systems.

This object is achieved with the features of the independent claims. The invention replaces accelerometers and their associated components with a vision system, consisting of an imaging unit (e.g. a vision system camera) and a processing unit (e.g. a microprocessor-based hardware), that determines the amplitude of a vibrating part of a vibration conveyor without being affected by the vibrations.

In a possible advantageous embodiment, the exposure time is chosen to be shorter than the oscillation time, and multiple consecutive images are taken with the exposure frequency which are analyzed to determine the vibration amplitude of the vibrating part. In that way overexposure or saturation of the image sensor of the imaging unit can be avoided. This can facilitate the following image processing for determining the vibration amplitude.

In another advantageous embodiment, the exposure time is chosen to be equal or longer than the oscillation time, and in that one image is taken and analyzed to determine the vibration amplitude of the vibrating part. This approach allows for more processing time for analyzing an image as the images are taken less frequent.

In yet another embodiment, the exposure time is chosen to be a factor between 0,8 and 0,99 shorter than the oscillation time and the exposure frequency is chosen to be equal or less than the vibration frequency, and in that one image is taken and analyzed to determine the vibration amplitude of the vibrating part. Although not a full oscillation is captured in this method, the achievable accuracy in determining the vibrating amplitude can nevertheless be sufficient in certain applications.

The determined vibration amplitude can be used to control the oscillation of the vibrating part, e.g. a drive unit of the vibration conveyor, which causes the vibrating part to oscillate. Thus, a closed loop control system for controlling the vibration amplitude of a vibrating part of a vibration conveyor is realized. The complex nonlinear behaviour of such vibration conveyors can be controlled effectively.

The present invention is described in greater detail in the following with reference to Fig. 1 to 5, which show exemplary, schematic and non-limiting advantageous embodiments of the invention. In the drawings:
Fig. 1 shows the vision system and the vibrating part of a vibration conveyor oscillating,
Fig. 2 shows an oscillation of the reference part and an exposure time T_{E} shorter than the oscillation time T_{A},
Fig. 3 shows an oscillation of the reference part and an exposure time T_{E} longer than the oscillation time T_{A},
Fig. 4 shows a closed loop control of a vibration conveyor using the vision system,
Fig. 5 shows the vision system and the basic structure of a vibration conveyor.

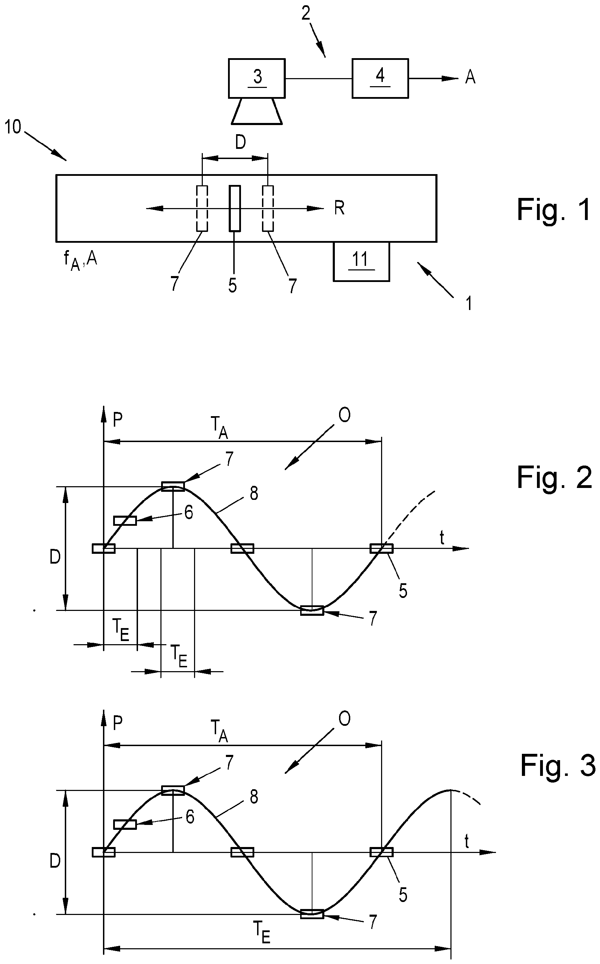

Fig. 1 shows an exemplarily embodiment of a vibrating part 1 (e.g. a conveying unit) of a vibration conveyor 10 (not shown in full in Fig. 1). The vibration conveyor 10 is e.g. a linear or rotary vibration conveyor. However, the invention is not limited to that kind of vibration conveyor 10. Other types of vibration conveyors with a vibrating part 1 known from prior art are also suitable.

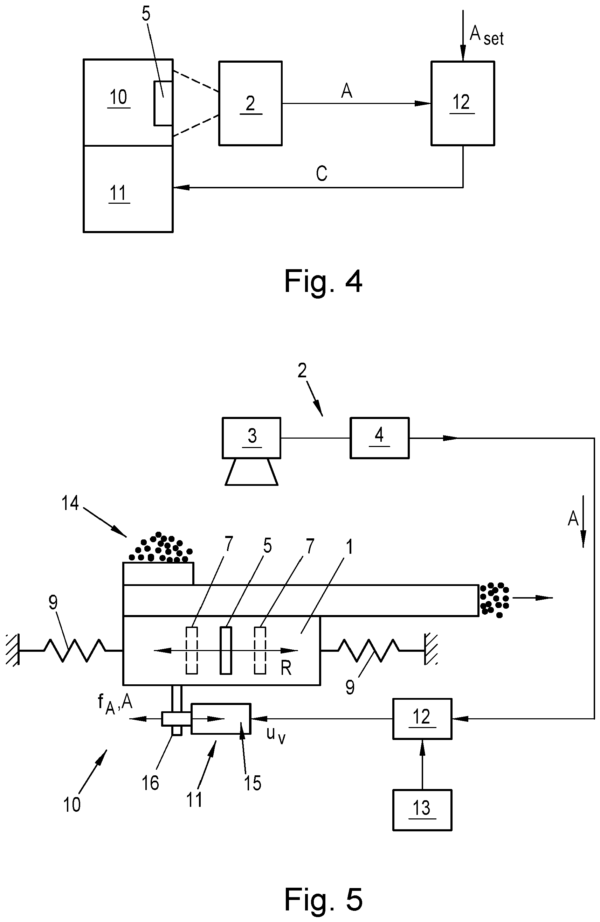

In use of the vibration conveyor 10, goods, e.g. bulk material (shown in Fig. 5), to be conveyed are arranged on the vibrating part 1. The goods are conveyed by the oscillating movement of the vibrating part 1. It is also possible to provide at least one spring or damper to be connected to the vibrating part 1 in order to support or amplify the oscillating movement of the vibrating part 1.

In general, a drive unit 11, for example, an electromagnetic vibrator, causes the vibrating part 1 to oscillate with a vibration frequency f_{A}, and a vibration amplitude A in a vibration direction R (indicated in Fig. 1 with the double arrow). The vibrating part 1 completes a full oscillation O in an oscillation time T_{A}, which is the reciprocal of the vibration frequency f_{A}. The vibration frequency f_{A}, and/or the vibration amplitude A may change during operation of the vibration conveyor 10.

A possible embodiment of the vibration conveyor 10 is explained with reference to Fig.5. In this embodiment, the drive unit 11 comprises, for example, a vibrator unit and a vibration element that interacts with the vibrator unit. The vibration element is connected, usually mechanically, to the vibrating part 1 of the vibration conveyor. The vibrator unit causes the vibration element to oscillate when it is supplied e.g. with an alternating current (AC) drive voltage. Because of the connection between the vibration element and the vibrating part 1, this oscillation is also imposed upon the vibrating part 1. There are different embodiments of a vibrator unit and a vibration element possible.

In an advantageous embodiment, the vibrator unit is an electromagnetic coil and the vibration element is a magnetic element. The magnetic element can be made of any magnetic material, like a ferromagnetic material, for example, or can be a magnet itself, e.g. a permanent magnet or electro magnet. The vibration element as the magnetic element interacts with the electromagnetic field generated by the vibrator unit as the electromagnetic coil and moves in response to the electromagnetic field. The vibration element may also be designed as moving core of an electromagnetic coil. When the electromagnetic coil is supplied with an AC drive voltage, the vibration element oscillates in response to the electromagnetic field. Due to the connection between the vibration element and the vibrating part 1, the vibrating part 1 also oscillates. The vibrating part 1 oscillates with a vibration frequency f_{A}, and a vibration amplitude A in a vibration direction R. It is possible to adjust the vibration frequency f_{A}, of the vibrating part 1 by changing the frequency of the AC drive voltage, e.g. supplied by a grid.

A vision system 2 is provided to determine the vibration amplitude A of the vibrating part 1 oscillating in the vibration direction R. The vision system 2 may provide, for example, a signal that can be used by other components, for example to control the drive unit 11.

The vision system 2 comprises an imaging unit 3 and a processing unit 4. The vision system 2 may also comprise a lighting unit (not shown), for illuminating the region to be imaged by the imaging unit 3 in known manner. The imaging unit 3, and the lighting unit if present, may also be controlled by the processing unit 4, or by a separate vision system control unit (not shown). The imaging unit 3 is preferably a vision system camera, consisting, for example, of an objective lens, an image sensor and a shutter (e.g. an electronic shutter or a mechanical shutter), which can open and close with an adjustable exposure frequency f_{E} and an adjustable exposure time T_{E} to take at least one image. The exposure time T_{E} (also known as shutter speed) is the time required to take one image by the imaging unit 3. The exposure frequency f_{E} defines how many images with the exposure time T_{E} are taken with the imaging unit 3 per time unit (e.g. per second).

Besides, the imaging unit 3 and/or the processing unit 4 can also have other controls or optical devices (e.g. known camera settings like focus, ISO, aperture, white balance, noise reduction, optical filters etc.) to be able to optimize the imaging depending on the characteristics of the application and surroundings (e.g. light conditions). The imaging unit 3 can also be motion stabilized in a way to be not affected by vibrations, for example, from the surroundings. The processing unit 4 is preferably a microprocessor-based hardware or microcontroller with an algorithm, designed to receive and to analyse the at least one image taken by the imaging unit 3. The processing unit 4, for example, can be connected to the imaging unit 3 via a suitable (wired or wireless) communication link to receive the at least one image. The vision system 2 can also be protected from the environment (e.g. waterproof or dustproof).

To determine the vibration amplitude A of the vibrating part 1 with the vision system 2, a reference part 5 of the vibrating part 1 is imaged by the imaging unit 3 while the vibrating part 1 oscillates. The reference part 5 can be part of the vibrating part 1 itself, for example, a rigid contour or rigid structure of the vibrating part 1. It is also possible to add the reference part 5 onto the vibrating part 1 (e.g. by adhesion, painting or using a sticker with an pictured object thereon). The reference part 5 has preferably a simple geometric shape, which can be an edge, a letter or a number or preferably a rectangle (as shown in Fig. 1).

In a possible embodiment, a digit or a letter, may be added to the vibrating part 1 as reference part 5.

The imaging unit 3 images the reference part 5 of the vibrating part 1 with an exposure frequency f_{E} while the vibrating part 1 oscillates in the vibration direction R, in order to take at least one image of the reference part 5 in different positions 6 during at least one full oscillation O with the exposure time T_{E}. A full oscillation O describes the vibrating motion of the reference part 5 in the vibration direction R between opposite extreme positions 7 (indicated in Fig.1 with dashed lines) caused by the vibration. The vibration amplitude A of the vibrating part 1 in the vibration direction R is given by the distance D between the opposite extreme positions 7. It is therefore a goal to determine the opposite extreme positions 7 in the taken at least one image of the reference part 5.

The taken at least one image is analysed in order to determine the opposite extreme positions 7 and the vibration amplitude A therefrom. This can be done by the processing unit 4, which can be adapted for that purpose. For analysing the taken at least one image, suitable image processing software may be used.

For example, blob recognition can be used to determine the opposite extreme positions 7. In general blob recognition or blob detection methods are used in image processing to detect points and/or regions in images (as well as their dimensions, position, centre, etc.) that differ in properties like brightness or color compared to the surrounding or background. A blob can be defined as a group of connected pixels in an image that share mentioned properties, e.g. same or approximately same brightness values. For example, a blob can be a bright object in a dark background or vice versa, whereas the boundaries of the object are sudden shifts from dark to bright or bright to dark. In case of the present invention the opposite extreme positions 7 of the reference part 5 captured in the at least one image may be detected for example due to different brightness or color values than compared to the vibrating part 1 as the surrounding. Alternatives to the blob recognition can be other known and suitable object detection methods for image processing like edge detection or corner detection.

From the determined opposite extreme positions 7 the distance D may be determined in the taken at least one image.

It is also possible to pre-process the images to eliminate noise or other influences that can affect the image processing.

With the known optical properties of the imaging unit 3, e.g. focal length, image sensor (size and number of pixels), and the know geometry of the arrangement, e.g. distance of imaging unit 3 from the reference part 5, the distance D in the real world can easily be determined.

Fig. 2 and Fig. 3 show, for the purpose of explanation only, an exemplarily oscillation O of the reference part 5. The different positions 6 of the reference part 5 during the oscillation time T_{A} are illustrated just for explanation as a sinusoidal path 8 (position P over time t). Since the vibration amplitude A of the vibrating part 1 is determined from the opposite extreme positions 7, which are determined from the different positions 6 of the reference part 5 during at least one full oscillation O, the accuracy of determining the vibration amplitude A depends on how well the different positions 6 of the reference part 5 during the at least one full oscillation O are captured in the at least one image taken by the imaging unit 3. Although opposite extreme positions 7 can be determined from different positions 6 of the reference part 5, if only a fraction of the at least one full oscillation O is captured, preferably the at least one full oscillation O of the reference part 5 is continuously captured in the at least one image, so that the opposite extreme positions 7 can be determined accurately by the processing unit 4 from the at least one image. Since the oscillation time T_{A} is usually not exactly or not at all known, different scenarios can occur, when choosing the exposure time T_{E} and the exposure frequency f_{E} of the imaging unit 3.

In order to determine the the opposite extreme positions 7 of the reference part 5, the opposite extreme positions 7 should be captured in the taken at least one image. This can be achieved in different ways, as explained in the following.

In a first embodiment, the exposure time T_{E} is chosen to be equal or longer than the oscillation time T_{A}, as shown in Fig. 3. This ensures that at least one full oscillation O of the reference part 5 is captured in one image and the opposite extreme positions 7 can be determined from the taken one image. The exposure time T_{E} should of course not be too long, in order to avoid overexposure or saturation of the image sensor. If the exposure time T_{E} is chosen to be too long, overexposure can occur, which means too much light is captured, for example, by the image sensor of the imaging unit 3 and the at least one image is too bright or too saturated to be further analyzed by the processing unit 4 and to determine the opposite extreme positions 7 accurately.

In this embodiment, different positions of the reference part 5 are captured in only one image. The reference part 5 is likely not discernible in the taken image anymore, which is however not necessary, as only the opposite extreme positions 7 are to be determined and these opposite extreme positions 7 are still discernible. It would be possible, for example, to apply image processing algorithms to the taken image in order to find edges in the vibration direction R, which represent the opposite extreme positions 7.

In this case, the exposure frequency f_{E} can also be greater than 1/T_{E} as it always ensured that a full oscillation O is captured in the taken image. The exposure frequency f_{E} could therefore also be chosen to be much greater than 1/T_{E}, depending on how often an update on the vibration amplitude A is required. This allows also for more elaborate image processing algorithms to be applied, if need be, as more calculation time is available between consecutive images.

It should be noted however, that the method of the first embodiment would nevertheless work, if the exposure time T_{E} were only slightly shorter than the oscillation time T_{A}. Although only part of the full oscillation O of the reference part 5 would be captured in the taken image, a vibration amplitude A could still be determined as described above, but with a certain maximum error that is dependent on the difference between actual T_{E} and T_{A}. In some applications, such an error could be acceptable. This can produce acceptable accuracies if the exposure time T_{E} is chosen to be not less than 0,8 · T_{A}.

In another embodiment, the exposure time T_{E} is chosen to be shorter than the oscillation time T_{A}, as shown in Fig. 2. In this case, a fraction of one full oscillation O of the reference part 5 is captured in one image. In order to capture the opposite extreme positions 7, multiple consecutive images are required. Different positions of the oscillating reference part 5 are captured in the consecutive multiple images. How many images are required depends on the difference between T_{E} and T_{A}. As mentioned above the total exposure time T_{E} captured in the multiple images during one full oscillation O should be not less than 0,8 · T_{A}. It can be assumed that at least T_{A} / T_{E} images should be taken in order to capture one full oscillation O of the reference part 5 in the multiple images.

In this embodiment, it is advantageous if the exposure frequency f_{E} is as close to the reciprocal of the exposure time T_{E} as possible, in order to capture the oscillation in the taken images as complete as possible.

In this embodiment, the multiple images need to be analysed in order to determine the opposite extreme positions 7. Also in this case, methods of image processing can be applied to do that. It would be possible, for example, to combine the taken multiple images into a single image and to analyse the obtained single image for determining the opposite extreme positions 7.

As a benchmark for choosing the exposure frequency f_{E} and the exposure time T_{E}, a trial- and-error approach can be used. It is also possible to determine a benchmark by taking the application, for which the vision system 2 is used, into account. For example, a known frequency range of the vibrating part 1 of the vibration conveyor 10 or any other given experience values or educated guesses can be considered to choose the exposure frequency f_{E} and the exposure time T_{E}. For example, if the vibrating part 1 is designed to oscillate with an adjustable vibration frequency f_{A} between 10 and 50 Hz, the oscillation time T_{A}, as the reciprocal of the vibration frequency f_{A}, is between 0.1 and 0.02 seconds, so that as a benchmark, for example, the exposure time T_{E} could be chosen to be at least 0.1 seconds to capture at least one full oscillation O in one image and the exposure frequency f_{E} could be chosen not much less than 10 Hz to minimize the pause between each image further taken. It is also possible, for example, to take multiple images with the exposure time T_{E} chosen to be many times shorter (e.g. 10 times) than 0.02 seconds, for example 0.002 seconds, and the exposure frequency f_{E} chosen to be not much less than 500 Hz, so that at least one full oscillation O is continuously captured in the multiple images and the pause between each image taken is minimized.

To determine the opposite extreme positions 7 of the reference part 5, the taken at least one image can be processed by the processing unit 4 of the vision system 2. The processing unit 4 is configured to analyse the taken at least one image and to determine the opposite extreme positions 7 from the different positions 6 of the reference part 5 captured in the taken at least one image. The processing unit 4 is configured to determine the distance D between the opposite extreme positions 7 in order to determine the vibration amplitude A of the vibrating part 1.

In a possible application the determined vibration amplitude A by the vision system 2 can be used, for example, to control the oscillation of the vibrating part 1 of a vibration conveyor 10.

Fig.4 schematically shows a closed loop control of a vibration conveyor 10 using a vision system 2 as described above. The vision system 2 determines the actual vibration amplitude A of a vibrating part 1 of a vibration conveyor 10 as described above. The determined vibration amplitude A is provided to a control unit 12 which is adapted to control the drive unit 11 that drives the vibration conveyor 10 to oscillate. The control 12 does also receive a setpoint vibration amplitude Aₛₑₜ and the control unit 12 is adapted to compensate any difference between the setpoint vibration amplitude Aₛₑₜ and the determined actual vibration amplitude A.

In the control unit 12 any suitable control algorithm may be implemented for that purpose. The control unit 12 generates a suitable control signal C for controlling the drive unit 11.

Fig. 5 shows an exemplarily embodiment of a linear vibration conveyor 10, which comprises a vibrating part 1, optional springs 9, a drive unit 11, which causes the vibrating part 1 to oscillate, and a control unit 12, which is supplied, for example, by a power grid 13. On the vibrating part 1 goods 14, e.g. bulk material as indicated in Fig. 5, are arranged to be conveyed. The goods 14 are conveyed by the oscillating movement of the vibrating part 1 (conveying direction is indicated by the single arrow). The control unit 12, for example, can be a controlled power converter (e.g. a frequency converter), which is configured to generate and control, for example, an AC drive voltage uv as control signal C. The drive unit 11, for example, is an electric vibrator 15 consisting of an electromagnetic coil and a vibration element 16 (e.g. a magnetic element made of any magnetic material, like a ferromagnetic material). The vibration element 16 as the magnetic element interacts with the electromagnetic field generated by the electric vibrator 15 as the electromagnetic coil and moves in response to the electromagnetic field. By supplying the electric vibrator 15 with the AC drive voltage uv, the vibration element 16 oscillates and, for example, due to a connection between the vibration element 16 and the vibrating part 1 (connection exemplarily illustrated in Fig. 5), the vibrating part 1 oscillates with a vibration frequency f_{A}, and a vibration amplitude A in a vibration direction R (indicated in Fig. 5 with the double arrow). The vibration amplitude A, determined by the vision system 2, is received by the control unit 12, which controls the AC drive voltage uv supplying the drive unit 11. In this way a closed loop control for controlling the vibration amplitude A of the vibrating part 1 of the vibration conveyor 10 can be enabled.

## Claims

1. Method for determining a vibration amplitude (A) of a vibrating part (1) of a vibration conveyor (10), wherein the vibrating part (1) oscillates with a vibration frequency (f_{A}) and the vibration amplitude (A) in a vibration direction (R), and wherein the vibrating part (1) completes a full oscillation (O) in an oscillation time (T_{A}), which is the reciprocal of the vibration frequency (f_{A}), **characterised in that** an imaging unit (3) images a reference part (5) of the vibrating part (1) with a given exposure frequency (f_{E}) while the vibrating part (1) oscillates in the vibration direction (R), in order to take at least one image of the reference part (5) in different positions (6) during at least one full oscillation (O) with a given exposure time (T_{E}), **in that** opposite extreme positions (7) of the reference part (5) in vibration direction (R) are determined from the at least one image, **and in that** the vibration amplitude (A) of the vibrating part (1) in the vibration direction (R) is determined as the distance (D) between the determined opposite extreme positions (7).

2. Method according to claim 1, **characterised in that** the exposure time (T_{E}) is chosen to be shorter than the oscillation time (T_{A}), and **in that** multiple consecutive images are taken with the exposure frequency (f_{E}) and the multiple images are analyzed to determine the vibration amplitude (A) of the vibrating part (1).

3. Method according to claim 1, **characterised in that** the exposure time (T_{E}) is chosen to be equal or longer than the oscillation time (T_{A}), and **in that** one image is taken and analyzed to determine the vibration amplitude (A) of the vibrating part (1).

4. Method according to claim 1, **characterised in that** the exposure time (T_{E}) is chosen to be a factor between 0,8 and 0,99 shorter than the oscillation time (T_{A}) and the exposure frequency (f_{E}) is chosen to be equal or less than the vibration frequency (f_{A}), and **in that** one image is taken and analysed to determine the vibration amplitude (A) of the vibrating part (1).

5. Arrangement for determining a vibration amplitude (A) of a vibrating part (1) of a vibration conveyor (10), wherein the vibrating part (1) oscillates with a vibration frequency (f_{A}) and a vibration amplitude (A) in a vibration direction (R), **characterised in that** a vision system (2) with an imaging unit (3) is provided and configured to take at least one image of a reference part (5) of the vibrating part (1) with an exposure frequency (f_{E}) and an exposure time (T_{E}) while the vibrating part (1) oscillates in the vibration direction (R), **in that** the vision system (2), preferably a processing unit (4) of the vision system (2), is configured to determine opposite extreme positions (7) of the reference part (5) in vibration direction (R) from the at least one image and therefrom the vibration amplitude (A) of the vibrating part (1) as the distance (D) between the opposite extreme positions (7).

6. Arrangement according to claim 5, **characterised in that** the arrangement further comprises a control unit (12) for controlling the oscillation of the vibrating part (1) of a vibration conveyor (10), **in that** the control unit (12) receives the determined vibration amplitude (A) from the vision system (2) and **in that** the control unit (12) is configured to use the received vibration amplitude (A) to control the oscillation of the vibrating part (1).

7. Arrangement according to claim 6, **characterised in that** the control unit (12) further receives a setpoint vibration amplitude (Aₛₑₜ) and **in that** the control unit (12) is configured to control the oscillation of the vibrating part (1) such that the vibration amplitude (A) follows the setpoint vibration amplitude (Aₛₑₜ).

8. Arrangement according to one of claims 5 to 7, **characterised in that** the reference part (5) is a part of the vibrating part (1) itself or the reference part (5) is a part added onto the vibrating part (1).
